# EUROPEAN PATENT APPLICATION

(11) **EP 2 615 859 A1**
(43) Date of publication of application: **17.07.2013**
(21) Application number: 12169672.8
(22) Date of filing: 25.05.2012
(51) Int. Cl.: H04W 4/20, H04W 4/00

(54) **Method and radio device wherein a radio diagnosis layer provides radio diagnosis information to a managing interface**

(30) Priority: 13.01.2012 EP 12151166
(71) Applicant: Cinterion Wireless Modules GmbH, 81541 München (DE)
(72) Inventor: Hilf, Eric, 12163 Berlin (DE); Antonov, Iavor, 13353 Berlin (DE); Breuer, Volker, 16727 Bötzow (DE)
(74) Representative: Eisenführ, Speiser & Partner

(57) **Abstract**

A radio device comprising a network accessing unit, a radio diagnosis layer and at least a managing interface wherein the radio diagnosis layer provides radio diagnosis information to at least a managing interface. Further radio diagnosis layer is adapted to receive managing commands from managing interface, in particular network operation abort commands. Radio diagnosis layer is adapted to interact with network accessing unit, and as such it is ascertained that the managing commands from managing interface are executed not before network accessing unit maintains a defined state, in particular in conjunction with wireless network.

## Description

### Technical field

The present invention relates to a radio device and a method for operating a radio device in conjunction with at least one managing interface.

Such radio devices are configured to access at least one wireless network and are designed to be built in mobile phones, personal computers, tablets and PDAs as well as in application apparatuses that are designated to communicate with other devices, in particular central servers (so-called machine-to-machine communication).

Generally such radio devices are designed that way that they communicate with the attached application apparatuses via a dedicated managing interface, in particular an AT-interface. The AT-interface is a standardized serial interface for modems that uses a common set of commands that can be enhanced by proprietary commands. Further a functional managing interface is possible as well. Here an application API is provided by the radio device and can be accessed by the attached application apparatus. This is preferably an object-oriented API, in particular based on Java.

Originally the communication between radio device and apparatus only consisted of general commands and responses, like setting up a voice call, receiving a voice call, sending textual messages etc. With the wide availability e.g. of wireless IP based services and therewith bound the growing use cases for mobile applications the requirements for the radio device and its managing interface have become increasingly complex. Moreover the mobile internet traffic per device and day has dramatically increased in the last years, following information from Ciscos Visual Networking Index Mobile 2011. Hence networks have become more and more congested when increasing numbers of devices try to access the network which can result in wait times, temporary rejection etc. Moreover network providers have introduced measures to secure their network, e.g. by banning for a certain time period radio devices that received a service rejection from the network, means a radio device may not be successful with an attach attempt but receives indications/information for its next try. However, this information is available on network's radio layer and not transparent for the application apparatus.

On the other hand the worst case for a device or apparatus that accesses a radio device via the dedicated managing interface is that the module is stuck in a certain state. This can mean that an operation of the radio device takes a long time, is in a stall mode or the radio device even has hang up and can only get resumed through a restart.

As a result of the described scenario a multitude of situations can occur where network accessing procedures performed by radio devices take much longer than expected and this situation cannot be distinguished from a hang-up radio device.

### Prior art

In today's implementations no solutions are known where such challenges are addressed appropriately. Mostly the only possibility in known solutions is to wait for the radio device to respond or to restart manually. Silent restarts after an alive time threshold has expired, executed by the application apparatus, do merely mitigate the problem.

### The invention

It is a major object of the instant invention to provide a radio device and a method which are adapted to improve a situation where an application device or apparatus that accesses a radio device via a dedicated managing interface. It is a further object of the present invention to solve the mentioned challenges, which in particular means to prevent situations where the radio device does not timely respond to commands from the attached application apparatus. It is still a further object of the invention to allow for distinguishing between certain modes of a radio device at an application device or apparatus or dedicated managing interface.

The object is achieved by a radio device of the invention as claimed in claim 1. As regards the method, the object is achieved by a method to operate a radio device as claimed in claim 12.

The object is achieved by the invention with a radio device wherein according to the invention the radio device comprises a network accessing unit, configured to perform network accessing procedure, a radio diagnosis layer, at least one managing interface, wherein the radio diagnosis layer exchanges information with at least one managing interface. The at least one managing interface receives radio diagnosis information from the radio diagnosis layer concerning status of at least one network accessing procedure.

It is a major advantage of the present invention to provide a radio device which offers at least a managing interface which prevents situations where the radio device has hang-up without available indication. It is a further advantage of the present invention to provide a method for operation of a radio device which prevents the radio device to hang-up or allows an early indication that the module got stuck. It is still a further advantage of the present invention to provide a radio device where the attached application apparatus is able to submit abort commands for long running procedures i.e. due to momentary network congestion wherein the radio device remains in a defined state synchronous to the actual network state in case it has or has attempted to get a connection. It is another advantage of the present invention to provide a radio device which has more than one managing interface and still prevents hang-up situations and / or to allow receiving abort commands through at least one of the managing interfaces. In a particular preferred development the inventive concept leads to a radio device with a radio diagnosis layer.

These aspects of the invention and further developments thereof are further outlined in the dependent claims. Thereby, the mentioned advantages of the proposed concept are even more improved.

The network accessing unit preferably is a component of a radio device which controls or performs operations with at least a wireless network like GSM, EDGE, GPRS, UMTS, LTE or the like. Such operations are network accessing procedures which are operations (of the network accessing unit) with at least a wireless network as mentioned before, including data exchange operations, registration and deregistration operations, operations to prepare other operations like channel request messages, channel reconfiguration messages, bearer reconfiguration messages, location updates, operations in conjunction with mobility management, operations in conjunction with an existing context between network accessing unit and network, e.g. establishment of PDP context etc.

The network accessing unit can preferably comprise or control the real RF unit, which physically performs wireless network access. The network accessing unit can e.g. be a logical component within the radio device, that is those functions in the central control structure of the radio device that handle network access related tasks.

Said radio diagnosis layer is preferably adapted to exchange information with the network accessing unit. It is a physical or logical layer in a radio device which acts as a message and command broker between network accessing unit and managing interface. The managing interface is e.g. a communication interface between radio device and the environment. This interface can be a logical or physical interface to an application apparatus, where the radio module is integrated, like a PC, or a car, e.g. an AT-interface between a radio module and an application or a functional interface. It can furthermore constitute a possible connection to the environment via Java Virtual Machine with APIs for AT Parser, Serial Interface, Flash-File-System and TCP/IP Stack.

Further preferably this interface can be a direct or indirect interface to a human user, so that it feeds a user interface which can be a touch screen, a display and keys or a much simpler user interface such as mere status lights. More than one managing interface can be connected to the radio diagnosis layer, e.g. one managing interface for providing commands to the radio diagnosis layer and one other managing interface for retrieving radio diagnosis information from the radio diagnosis layer. Radio diagnosis information are status information that provide information concerning the status of network accessing procedures. For the current invention it does not matter if the environment units accessing the managing interfaces are interconnected. The radio diagnosis layer may retrieve information from all network accessing procedures or only from a defined set, means at least one network accessing procedure.

The radio diagnosis layer is preferably adapted to provide radio diagnosis information to at least one attached managing interface, either initiatively or on request.

It is understood that the mentioned components of the radio device can by either physically separated or logically integrated in one component, or some parts are combined in single components. Preferably the radio diagnosis layer is situated in a controller component as part of the firmware or driver.

The developed architecture of the radio device is advantageous as it provides an abstraction between the at least on managing interface and the network accessing unit. In conventional radio devices a command received by a managing interface is directly performed by the network accessing unit, and while the network accessing unit is busy with the current operation the managing interface is blocked. Moreover commands from a possible second managing interface are either blocked as well - although for the attached application apparatus at that second managing interface it might not even known that the radio device is currently occupied by another operation - or an undefined status in the radio device might occur, when a second operation needs a first operation e.g. a registration, to be successfully executed, but this first operation has not yet terminated.

With the radio diagnosis layer as part of the concept of the invention or developments thereof the radio device is capable of providing status information about the currently running operation and in parallel assures a consistent status of the device. This configuration allows different scenarios, wherein the following list is not exhaustive:

### a) asynchronously executed commands via a first managing interface. Any managing interface can now determine radio diagnosis information or submit further commands.

With this option the commands from the managing interface do not lead to blocking the attached application apparatus. In an advantageous embodiment after submitting the command the attached application apparatus can poll for further radio diagnosis information and in parallel handle different operations like changes in UI. This leaves the control in the hands of the calling application apparatus and allows for defining a polling frequency individually and to perform any other operation, like any type of housekeeping, in the meantime.

In another development the radio diagnosis information are read through a second managing interface.

In both cases it does not matter if the radio diagnosis information request is performed through a command interface or if a read access to a common memory area is established where radio device, in particular through the radio diagnosis layer, and the attached application apparatus in particular through a managing interface have access.

### b) synchronously executed commands via first managing interface, while over at least a second managing interface radio diagnosis information about the current operation can be determined.

With this option the commands from the first managing interface lead to a blocking of the attached application apparatus but another application apparatus attached to the second managing interface can request for radio diagnosis information as described for option a). Both attached application apparatuses can form one physical device with different independent controllers or threads.

### c) asynchronously or synchronously executed commands via a first managing interface, while at least a second managing interface listens to events fired from radio diagnosis layer.

With this option no regular polling is performed from the attached application apparatus via at least one managing interface, but it is implemented as event listener or catching exceptions. Preferably this is implemented as a radio device with an AT-interface that fires URCs (unsolicited result code), that need to be recognized by the application apparatus, but other types of events or exceptions based on a functional managing interface are possible as well.

Preferably the selected type of interface behaviour is assigned to certain selected commands, in particular those where a longer execution time can be expected. It is further possible that in one radio device different commands offer different behaviours according to the listed options.

What information are present in radio diagnosis information is arbitrary for each implementation. In advantageous implementations radio diagnosis information comprises the status of the network accessing unit, in particular if failures are encountered by the radio diagnosis layer or not. With that the application apparatus receives information if the radio device still is working fine or if an error occurred, and can be handled appropriately.

In an advantageous development the radio diagnosis information comprises additional information that provide more information regarding the currently executed operation, in particular a network accessing procedure. Such additional information can consist of one or more of the following:
- a progress indication indicating how far the current operation has come. This can be a simple percentage value or number value of successful executed procedure steps, further this can be detailed information which procedure steps have already been terminated. Depending on the application apparatus which submitted the procedure command via managing interface these information can be interpreted accordingly.
- Time until next operation step: this is helpful if network accessing unit receives from network a wait time until the next retry. Actually the radio device cannot do anything in the meantime but run a timer. The information when the next operation, that is the next retry is executed is helpful for a calling application apparatus as it can adjust its polling timer, give information to the user interface etc.
- Indication if current operation is in a state at which it can be aborted. As explained below certain developments of the invention allow for accepting and executing abort commands. This is preferably only possible if the current operation is in an abortable status, which is reported with this information.

More valuable information to be contained in radio diagnosis information are possible and are claimed as part of the invention. It is further part of the invention to provide both mere status information and such enriched diagnosis information which relate to the progress of the current operation.

In another development the radio diagnosis layer is adapted to receive an abort command that is dedicated to cancel current procedure, in particular network accessing procedure, during process before it terminated itself. The command is preferably submitted via at least one managing interface. Preferably network accessing procedures cannot be cancelled at any time, e.g. when requests to the network are made and waited for a response or vice versa. If a radio device stops communication with the network without being shut-off (following a complete synchronization and registration procedure) it remains in an undefined status and may be not accepted by the network anymore, at last for a given time period. The inventive radio diagnosis layer here comes into play and receives the abort command submitted via managing interface but does not immediately promote it to the network accessing unit. Instead radio diagnosis layer monitors network accessing unit until network accessing unit indicates that the current network accessing procedure is in a status where it can be aborted.

How radio diagnosis layer determines that network accessing unit is in an abortable status is arbitrary for each implementation. In a preferred development radio diagnosis layer listens to status messages provided by network accessing unit indicating status of the current operation, in particular if it can be aborted. Alternatively such status information can be polled or read out of shared memory areas. In another preferred development radio diagnosis layer has knowledge about network related timers and/or time thresholds, like wait periods until network respond is expected (for many reject causes, current standards require a radio device to make further attempts which are governed by timers e.g. timers T3380, T3390 for PDP context activation). Thus it is not required to double check with network accessing unit whether a timer has expired. Most of the timers related to network interaction are configurable by the network hence radio network layer can retrieve such information from the radio layer to inform application when next attempt is allowed to be executed.

In a preferred development a network accessing procedure executed by network accessing unit is composed of one or more defined operation groups in a predetermined order. Two successive operation groups are combined by a transition, preferably the transition consists of a transition phase where a predetermined time elapses before the next operation group is executed. For each transition preferably at least a condition is defined. The condition preferably carries a value out of a set of possible values. The set of values preferably includes a value "stable" indicating that the procedure is abortable at this transition. Should the procedure be aborted at the transition the network accessing unit is in a defined stable status and no side-effects or inconsistencies appear when the procedure is cancelled. During execution of an operation group an interruption of the operation is not possible, an operation group can therefore be seen as atomic operation or a transaction, which assures a defined status at the end of the transaction.

Further the set of values preferably includes a value "transient", indicating that the procedure is not abortable at this transition. Abort commands are rejected at this transition, or at least postponed until the next transition with status "stable". Nevertheless a transition with condition value "transient" is helpful as at each transition radio diagnosis layer receives an indication about the progress of the current network accessing procedure. Therefore it is advantageous that each transition additionally carries information about the progress of the current operation, e.g. how many operation groups are to be performed in the network accessing procedure and/or which sequential number the operation group has that preceded the transition. Additionally at a transition the radio diagnosis layer can be informed if an operation in the previous operation group has failed, regardless if the operation can be repeated or if it leads to a complete termination of the network accessing procedure, e.g. due to the fact that no network cell can be detected.

Further the set of values preferably includes a value "terminated", indicating that the network accessing procedure has terminated with the previously executed operation group. This status value is mainly useful if the transition can have different condition values, depending on the status of the previous operation group. If it needs to be repeated, transition condition is set to status "stable" or "transient", if it was successful the transition condition is set to "terminated" and the network accessing procedure ends here.

Further status values for further purposes are possible.

Such radio diagnosis information can besides a simple 'in progress' or 'still alive' message be enriched with detailed information that are determined by the radio diagnosis layer and consequently provided to attached managing interfaces. For an attached managing interface it is transparent if radio diagnosis layer gets such enriched radio diagnosis information directly from network accessing unit or it gets a simple status message from the network accessing unit and retrieves additional information initiatively. Furthermore information can be transparent to managing interface if in radio diagnosis layer certain available information are transferred into another logic, i.e. if a still alive message is not received in a defined timeframe a device stuck message may be send to managing interface.

In an advantageous development a network accessing procedure is composed of operation groups which comprise at least two successive operation groups which are identical. The transition preferably comprises a wait period. This is required for retry-mechanisms. The condition assigned to the transition is in case of a retry "stable", therefore it is possible to abort the network accessing procedure during the wait period for a retry. If the first of two identical operation groups terminates successfully, no retry is required. Then the network accessing procedure terminates or another operation group follows after a further transition. This type of construction of network accessing procedures composed of operation groups preferably includes that the operation groups are not only sequentially executed but transitions can also be conditional. In this case the operation group following the current transition preferably is only executed if the previous operation group was not successful or at least returned with a defined command, in particular a "retry after x seconds"-command.

The abortion of network accessing procedures according to a preferred development of the present invention is executed as follows. The preferred radio device receives via managing interface an abort command. The calling application apparatus does not necessarily need to know about the status of the current network processing procedure besides the fact that a network processing procedure was initiated. If no network processing procedure is running, no actions are required, it is only to be defined if an error or warning status - like nothing to abort - is returned or an acknowledgement is returned indicating that now for sure no network processing procedure is running. Both options are possible and depend on the singular use case.

When the abort command is received via managing interface preferably radio diagnosis layer is the first to handle the command. Here it is analyzed if anything is to do, that is if there is an operational network accessing procedure. Now preferably it needs to be checked by radio diagnosis layer if the network accessing unit is currently in an abortable status. That is especially true, when in the network accessing unit a network accessing procedure reached a transition with status 'stable'.

In this case the radio diagnosis layer can promote the abort command to the network accessing unit. The network accessing unit then cancels the network accessing procedure which therefore terminates during the current transition. Preferably a positive status message is returned to radio diagnosis layer and radio diagnosis layer can provide managing interface, in particular the calling managing interface with the status information that the abort command was successful.

Should the network accessing unit indicate to the radio diagnosis layer that the network accessing procedure is currently not in an abortable status, radio diagnosis layer preferably suspends the abort command. Preferably it is stored in a queue. Then radio diagnosis layer regularly checks the status of the network accessing unit resp. current network accessing procedure, which preferably happens by polling or by listening to events from network accessing unit.

When network accessing unit reaches a transition between two operation groups, radio diagnosis layer is informed about it. Now it is first checked which condition the transition holds. If the condition is 'transient', no abort is possible, but radio diagnosis layer can provide to managing interface a status update.

If the condition is "stable", the abort command can preferably be promoted to network accessing unit, which subsequentially aborts the currently running network accessing procedure. The result of this cancellation is forwarded to radio diagnosis layer which provides the result to managing interfaces as a status update.

If it turns out during handling of an abort command that the current operation group of the network accessing procedure is the final operation group the network accessing procedure will preferably terminate before an abort is possible. The same is true preferably if the current operation group is not the final operation group of the network accessing procedure, but all transitions between the rest of the operation groups do not hold condition "stable". As a result the abort command cannot be performed. In another preferable development in this situation a distinction between the type of network accessing procedure is necessary.

One advantageous distinction bases on the nature of the network accessing procedure: Is it a reversible operation or not? Typical non-reversible operations are data transmissions or receptions, location update etc. Reversible operations are attach, register, context activation or connect operations. They are characterized by the fact that a defined reverse operation is assigned.

The preferred development includes the step that after an abort command was unsuccessful for the current network accessing procedure due to the fact that the network accessing procedure terminated successfully before a transition with condition "stable" appeared, it is checked - preferably by radio diagnosis layer - if the terminated network accessing procedure is reversible. This can preferably be investigated by a lookup table where network accessing procedure type identifier and their assigned reverse procedures are listed, and each network accessing procedure can be identified by a type identifier. If this condition is true, then a command to execute assigned reverse operation is preferably submitted from radio diagnosis layer towards network accessing unit. This leads in case of a register operation to executing the assigned deregister operation. The effect is that after an abort command is submitted while a reversible network accessing procedure is running the expected outcome for the application apparatus is that after abort command was executed successfully the status is achieved that was encountered before the network accessing procedure was started.

In another preferred development radio diagnosis layer is adapted to handle other types of commands submitted via at least one managing interface. Those commands are dedicated to execute a first network accessing procedure characterized by the fact that it cannot be operated in parallel with a second network accessing procedure. Such second network accessing procedure is in particular an attach, voice connection, or context activation operation. The first procedure is therefore in particular a data transmission operation. This is in particular relevant for such devices who are not capable of handling combined operations, that is data transmission (in packet switched domain) in parallel to a voice connection (circuit switched).

When radio diagnosis layer receives said command dedicated to execute a second network accessing procedure it preferably first checks the status of the ongoing first network accessing procedure.

If first network accessing procedure has not started or was executed unsuccessfully preferably a failure message is returned to managing interface.

If first network accessing procedure has started but has not terminated when said command to execute second network accessing procedure preferably the radio diagnosis layer performs the following steps:
- derive from said command received from managing interface an abort command for the first network accessing procedure, whereby the original command can be maintained or discarded after handling the derived abort command;
- Promote said abort command to network accessing unit under the conditions depicted above, in particular the first network accessing procedure shall be aborted at the next stable transition or reversed provided it ends successfully without reaching a stable transition and is a reversible network accessing procedure;.
- If the first network accessing procedure has executed successfully in the meantime the command for the second network accessing structure shall also be considered as a release indication for the first connection and establishment of second shall be promoted.

Reason for this behaviour is to avoid inconsistent status at application apparatus side. Certain devices can in general or momentarily not support different call types in parallel. In this case the radio diagnosis layer ensures that all necessary actions are taken to promote a fast setup at the higher ranked service requested. In the example given above this would mean a data connection attempt responded by the network with a wait timer is aborted for an immediate access attempt to the CS domain. Besides the mentioned interaction of radio diagnosis layer and managing interface on the one hand and network accessing unit on the other hand radio diagnosis layer is in a further preferred development adapted to cope with situations where network accessing unit requires a remarkably long time for network accessing procedures. This can happen due to operation groups as part of a network accessing procedure that individually takes long time to execute.

For such cases radio diagnosis layer preferably maintains a radio diagnosis information timer, which is adapted to measure time since the last radio diagnosis information was provided to managing interfaces. Preferably each time radio a diagnosis information is provided to managing interfaces the timer is reset. This can in particular happen when operation groups of a network accessing procedure reach a transition, regardless if it hold the condition 'stable' or 'transient'.

If the timer expires, that is a certain predetermined time threshold is reached during executing of a network accessing procedure, radio diagnosis layer preferably determines available information about current network accessing procedure and provides radio diagnosis information to at least one managing interface. Such calling application apparatuses receive at least a 'still alive'-message from the radio device and therefore do not tend to reset the module as preferably done in known implementations.

Preferred determined information about the current network accessing procedures that can optionally be provided with a radio diagnosis information are the wait time until the next retry of a network operation. Such calling application apparatus is informed about the status and can optionally - or manually - decide to submit an abort command if no retry is desired.

A particular preferred radio device is adapted to be embedded in certain types of application apparatus environments. In particular the radio device allows to be connected to one or more application apparatus over more than one managing interfaces. Preferably the same application apparatus connects to at least two managing interfaces for different purposes. Thus a first managing interface is preferably used to submit commands to radio diagnosis layer, like activate PDP context, perform data transmission, or to abort a previous command. This is regardless if it is an asynchronous or synchronous interface. A second managing interface is preferably used to retrieve radio diagnosis information. Such application apparatus is informed about the status of the radio device, in particular in case of long running operations following a command via first managing interface. Further a third managing interface can preferably be used to monitor if a network accessing procedure has ended. This is helpful to decide if further network accessing procedures are initiated by a command via first managing interface or if network accessing procedures that require a second network accessing procedure to be executed successfully can be launched.

### Detailed example

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality. The invention will now be described in detail with the accompanying drawing. This description covers only preferred embodiments of the invention, but is not intended to limit the scope of the invention. In the drawing:
Fig. 1 shows a schematic structure of a radio device of an embodiment according to the invention;
Fig. 2 shows in a schematic diagram an embodiment of a composition of network accessing procedures performed in network accessing unit;
Fig. 3 shows another embodiment of a composition of network accessing procedures with a retry;
Fig. 4 shows a flow chart of an exemplary preferred embodiment of a method following the concept of the invention.

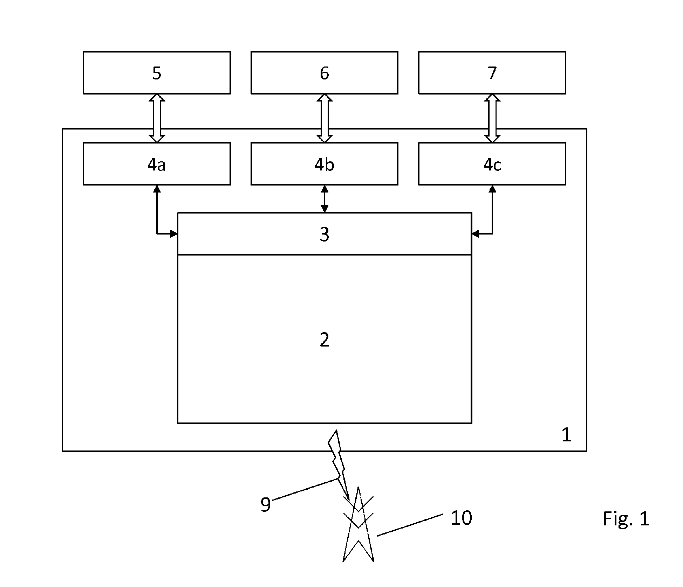

Fig. 1 shows in a schematic overview the constructive components of an exemplary embodiment of a radio device 1. Central component is the network accessing unit 2 which performs all RF communication with the wireless network 10 over the air interface 9. This is preferably where the protocol stack is situated, covering at least lower levels of the device. Network accessing unit 2 is operably connected to radio diagnosis layer 3. Radio diagnosis layer 3 acts as a broker between network accessing unit 2 and managing interfaces 4a, 4b, 4c. It is adapted to receive managing commands from managing interfaces 4a, 4b, 4c and promote to network accessing unit 2 under the condition that network accessing unit 2 is prepared to accept commands for executing network accessing procedures (not shown) that perform communication with wireless network 10.

Radio device 1 is embedded in at least one application apparatus 5, 6, 7 which is connected via managing interfaces 4a, 4b, 4c. In the displayed example three logical application apparatuses are present, which can be interconnected or even build one device. Application apparatus 5 is a command application that is adapted to submit managing commands to radio device 1 via managing interface 4a. The managing interface can be synchronously or asynchronously. Application apparatus 6 represents a user interface of a device and is adapted to display status information characterising status of radio device 1. Thus it accesses managing interface 4b for reception of radio diagnosis information provided by radio diagnosis layer 2 via managing interface 4b. This can be a functional callback interface communication or reception of URCs or further. Third exemplary application apparatus 7 is a logger which logs all status messages and radio diagnosis information received through managing interface 4c.

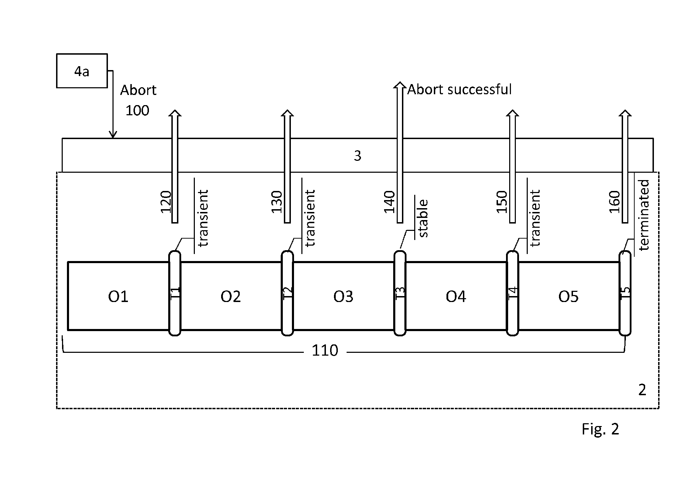

In Fig. 2 a preferred embodiment of an exemplary network accessing procedure 110 is displayed which is to be performed in network accessing unit 2. As it can be seen network accessing procedure is composed out of 5 operation groups (O1 - O5). Each operation group follows a transition T1 - T5, which either follows another operation group or the network accessing procedure ends. Each transition T1 - T5 is marked with a status condition depicting the status of the operation at that transition. In this example three transitions are marked as 'transient', one as 'stable' and the last one preferably is marked as 'terminated'. Examples for such transitions are:
- Trying to attach in PS (packet switched) or CS (circuit switched) or combined → transient state
- Idle (that is e.g. attach final rejected), attached successful PS or CS or combined → stable state.

Following the concept of the invention in this embodiment a network accessing procedure 110 is started following a command submitted from radio diagnosis layer 3 to network accessing unit 2. The execution of network accessing procedure 110 starts at operation group O1. In this example during execution of operation group O1 radio diagnosis layer 3 receives an abort command from managing interface 4a. Radio diagnosis layer 3 determines that the network accessing unit 2 is currently executing a network accessing procedure 110. Hence radio diagnosis layer 2 waits for the next transition. For radio diagnosis layer it generally does not matter to know which operation group O1-O5 is currently processed, it only looks for the next transition and its status.

Operation group O1 is followed by transition T1. Transition T1 holds condition 'transient', radio diagnosis layer is informed by this and submits radio diagnosis information 120 indicating to upper managing interfaces 4a, 4b, 4c that the currently running process is still executing ("still alive" message) and reached the next procedure step, but an abort is not possible in that phase. Consequently network accessing operation continues with operation group 02, as long as transition T1 does not indicate anything else. After 02 has finished again the following transition (T2) is reached which as well holds condition 'transient'. Again radio diagnosis information 130 is submitted to managing interfaces 4a, 4b, 4c.

Now operation group 03 is executed, which is followed by transition T3. T3 now indicates through its condition that the network accessing procedure has reached a 'stable' status, which means it can be aborted without any risks of side effects, inconsistencies, hang-ups or trouble with the network. Radio diagnosis layer detects this situation and promotes the abort command (not shown) to network accessing unit. Network accessing unit executes the abortion of the current network accessing procedure and informs radio diagnosis layer about successful abortion. Radio diagnosis layer sends radio diagnosis information 140 to managing interfaces with the information that the abort command was successfully executed. The following operation groups 04, 05 are not executed anymore.

Should no abort command appear network accessing procedure would continue with operation group 04 and 05, with sending radio diagnosis information 150 when reaching transition T4 and finally terminates at transition T5. There the status is 'terminated', which means that the status is stable and the network accessing procedure has successfully ended, but no abort is possible at this point anymore. Should at 05 an abort command reach radio diagnosis layer another scenario could be executed provided the currently executed network accessing procedure is reversible. In this case the assigned reverse network accessing procedure, like a detach following an attach procedure etc., would be launched.

It is preferred to maintain at least an internal timer in particular in radio diagnosis layer or at an application in case one of the mentioned operations really gets stuck, in order to allow the attached application devices to take measures like an error message or a restart etc.

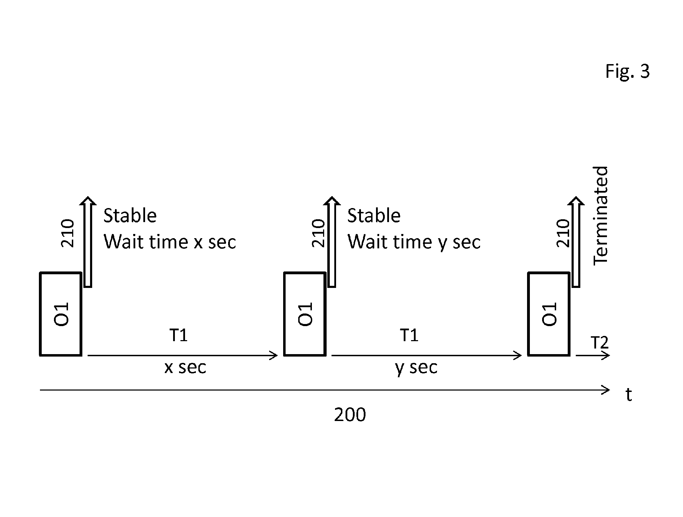

In Fig. 3 a preferred embodiment of a special network accessing procedure is depicted. Here the network accessing procedure consists of repeating operation group O1 that is always the same operation. This is required for a retry mechanism, but requires at the transition a conditional handling.

Generally the same start-up as in Fig. 2 is based, and the network accessing operation 200 is started, starting with the first operation group O1. This can be a GPRS attach procedure. In co-ordination with wireless network it turns out that the GPRS attach is not possible now, in particular due to network congestion. In effect wireless network informs network accessing unit that it shall wait x seconds until the next try to execute a GPRS attach process. This leads to a transition phase which lasts x seconds, but the transition indicates that status is stable. Therefore any abort command received during transition time or even earlier during execution of operation group O1 resp. the first GPRS attach try now immediately leads to an abort of the whole operation.

If no abort is received the network accessing procedure continues with the next try of executing O1. Generally it is possible that in one of the next retries the transition time is different from the previous times, in particular longer, therefore in present example transition time is set to y sec.

If finally operation group O1 has terminated successfully, e.g. GPRS attach was successful, the network accessing procedure ends with transition T2 which indicates status 'terminated'. The network accessing procedure was successful. This shows that based on the result of the operating group the following transition can be dynamically selected or at least adapted by means of different status and condition values.

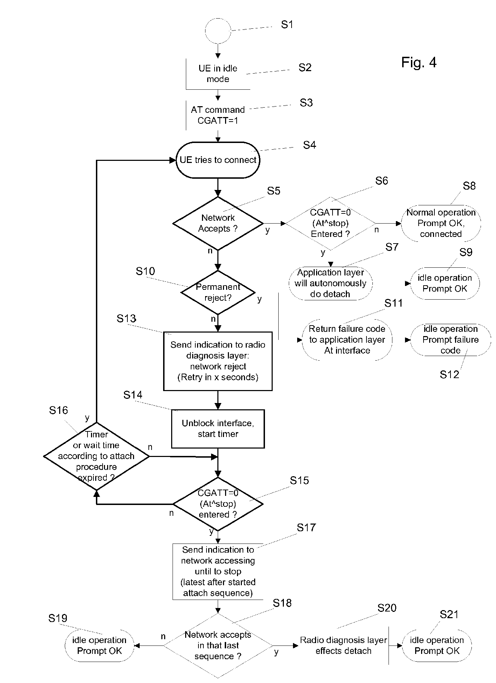

Fig. 4 shows in analogy to Fig. 3 a preferred embodiment of a method in a flow chart for the example of a GPRS attach command which decisions and operations are done when the inventive method is implemented.

The process starts with radio device (UE) in idle mode (S2), that is it is not attached to the GPRS network, no communication via wireless network is possible right now. Through managing interface the radio module receives AT command CGATT=1, which is the defined command for GPRS attach (S3). The command is received at radio diagnosis layer. As radio module is in idle mode, no other network accessing procedure is currently running in network accessing unit, therefore network accessing unit gets promoted the GRPS attach command from radio diagnosis layer and tries to connect to GRPS network (S4). In Fig. 4 the steps and connecting arrows in thicker lines mark the central retry cycle described in the following.

In S5 it is checked if network accepted the connection request. If it is successful the retry cycle ends and it needs to be checked if in the meantime an abort command was received. In this case this is in particular the detach command CGATT=0. It can be seen that this is a dedicated abort command urging radio device to abort only command GRPS attach, if other network access procedures were in progress or pending they would not be affected. If the condition in S6 is true the detach operation is executed (S7) and the radio device ends up in idle mode again (S9). If condition in S6 is false the attach operation was successful, hence the radio device is connected to the GPRS network, thus a success message can be send via radio diagnosis information to the calling managing interfaces (S8).

Provided in step S5 it was detected that network did not accept the attach command, network accessing procedure continues with step S10, where it is checked if the rejection was permanent. This can be the case if the device resp. its IMSI is not accepted by the network, no network is available or other blocking points exist. In this case it makes no sense to repeat the procedure and therefore a failure code preferably representing specific non-final cause values of the Attach Request rejection is provided in a radio diagnosis information to the calling managing interfaces (S11). Finally the radio device reaches again status idle without being connected (S12).

Otherwise radio diagnosis layer is in step S13 informed about the retry period and a transition phase is started. The attached application apparatus can trigger whether such 'still alive' messages are to be sent (periodic or event driven) from radio diagnosis layers, according to each defined state. Message example: attach is in progress, and the next request will be made in x seconds (see 3GPP TS 24.008: T3302; reject cause #17 network failure). Hence the attached applications can use the sub-states especially the transient states to register periodic updates of the status, to see whether the attach is still in progress and when the achievement of a new state is envisaged or next try is made. Hence this can be the basis for a decision to abort a command or to conclude whether it is still a normal mode of operation. Not receiving a message from a transient state anymore and no indication that a finite state was reached indicates that the module has a problem.

As it is now possible to abort the process at least during transition phase the managing interface is opened for commands from attached applications like an abort, if it is not already open from a previous loop cycle. Commands that require a successfully executed attach operation are not possible at this moment. Alternatively they can be handled as abort commands. Further the timer is started at this step (S14).

In the next steps it is successively checked if timer has expired (S16) or an abort command (CGATT = 0) was received (S15), that is before the result of attach command CGATT = 1 is known. Usually it does not make a difference with what check it is started. As long as none of both conditions are fulfilled these checks are continuously repeated. Transferred to Fig. 3 the process here is situated in transition phase T1.

Should an abort command reach radio diagnosis layer in this phase it immediately promotes this command to network accessing unit (S17). As the network can accept the connection request from radio device during wait time it needs to be checked in step S18 if such an acceptance has happened meanwhile. If so a detach needs to be executed (S20) and finally the radio device reaches status idle and prompts a successful abort command to managing interfaces (S21). Otherwise the operation just ends and the device reaches status idle as well and as well prompts a successful abort command to managing interfaces (S19).

Should the timer or the wait time expire in S16 the process starts again in step S4 with a next try to connect to network. Unless the wait time is expired the status whether the attach shall be resumed in step S4 or whether abort was entered (S15) can be checked periodically.

## Claims

1. Radio device, comprising:
a network accessing unit, adapted to perform network accessing procedures a radio diagnosis layer
at least one managing interface, wherein
the radio diagnosis layer is adapted to exchange information with the network accessing unit and
the radio diagnosis layer is adapted to exchange information with at least one managing interface, wherein
the at least one managing interface is adapted to receive radio diagnosis information concerning status of at least one network accessing procedure from the radio diagnosis layer.

2. Radio device according to claim 1, wherein the radio diagnosis layer is adapted to determine radio diagnosis information by a read access to a radio diagnosis information repository, when the network accessing unit performs write access to radio diagnosis information repository, and/or from message events sent by the network accessing unit to the radio diagnosis layer.

3. Radio device according to claim 1 or 2, **characterized in that** the radio diagnosis layer is adapted to receive an abort command, which is dedicated to cancel current operation, in particular a network accessing procedure, from the at least one managing interface, wherein the radio diagnosis layer is adapted to promote the abort command to the network accessing unit not before the radio diagnosis layer determines that the abort command is possible, in particular either by receiving status message provided by the network accessing unit indicating that an abort of current network accessing procedure is allowed or by detecting that a network related timer has reached a certain time threshold.

4. Radio device according to one of the precedent claims,
wherein the radio diagnosis information comprise one or more information items selected from the group of information items comprising:
- the status of the network accessing unit, in particular if failures are encountered or not
- progress of the current operation
- time until next operation step, in particular next retry,
- an indication if current operation is in a state where it can be aborted.

5. Radio device according to one of the precedent claims, wherein the at least one network accessing procedure is adapted to consist of one or more defined operation groups, and wherein for the transition of at least two successive operation groups a condition is defined, which indicates whether a status message characterizing status of network accessing procedure is sent to radio diagnosis layer and/or whether the network accessing procedure can be aborted at this transition.

6. Radio device according to claim 5 wherein a first one and a second one of the two successive operation groups are identical and the transition between both lasts a defined retry period, in particular defined by the network.

7. Radio device according to one of the preceding claims, wherein the radio diagnosis layer is adapted to receive an abort message from the at least one managing interface, and as soon as the radio diagnosis layer ascertains an indication of the network accessing unit that the currently performed network accessing procedure has reached a transition of defined operation groups with the transition condition that the network accessing procedure can be aborted, the radio diagnosis layer is adapted to promote the abort command to the network accessing unit, and the network accessing unit is adapted to abort the currently performed network accessing procedure at the actual operation group transition.

8. Radio device according to one of the preceding claims wherein the radio diagnosis layer is adapted to receive an abort message from the at least one managing interface, and the network accessing unit is adapted to indicate thereafter that the currently performed network accessing procedure terminated successful, in particular without prior reaching a transition of operation groups in the meantime, in particular one where an abort is allowed, the radio diagnosis layer is adapted to perform the following steps:
- determine whether said network accessing procedure is reversible, in particular if it is an attach, register, context activation or connect operation, wherein
- if network accessing procedure is reversible send to network accessing unit a command to execute a reverse operation, in particular a detach, deregister, context deactivation or disconnect operation.

9. Radio device according to one of the precedent claims wherein the radio diagnosis layer maintains a radio diagnosis information timer, which is adapted to measure the time since the last radio diagnosis information was provided, and if the radio diagnosis information timer exceeds a predefined timer threshold while a network accessing procedure is in progress, the radio diagnosis layer is adapted to determine information about a current network accessing procedure and is adapted to provide radio diagnosis information to the at least one managing interface.

10. Radio device according to one of the precedent claims, wherein the radio diagnosis layer is adapted to connect more than one managing interface, in particular wherein a first managing interface is adapted to submit managing commands to the radio diagnosis layer, and/or a second managing interface is adapted to retrieve radio diagnosis information, and/or a third managing interface is adapted to retrieve the information that the network accessing procedure has ended.

11. Radio device according to one of the precedent claims, wherein the radio diagnosis layer is adapted to receive from the at least one managing interface a managing command requesting a first network accessing procedure and afterwards a managing command requesting a second network accessing procedure wherein the first network accessing procedure cannot be operated in parallel with the second network accessing procedure, in particular an attach, register, voice connection or context activation command, radio diagnosis layer is adapted to perform the following steps:
- determine whether the first network accessing procedure was successfully executed, wherein
- if this is the case, promote said managing command requesting a second network accessing procedure to network accessing unit,
- otherwise determine whether a network accessing procedure, in particular the first network accessing procedure, is currently under execution, wherein
- if this is the case, derive from managing command requesting a second network accessing procedure an abort command and promote said abort command to the network accessing unit, in particular under the conditions of one or more of claims 3, 7 and 8 in order to allow promoting original managing command requesting a second network accessing procedure to network accessing unit.

12. Method for operating a radio device, in particular a radio device according to one of the preceding claims, the method comprising the steps of:
- performing network accessing procedures at a network accessing unit,
- exchanging information between a radio diagnosis layer and the network accessing unit, and
- exchanging information between the radio diagnosis layer and at least one managing interface, and
- providing to the at least one managing interface radio diagnosis information concerning status of at least one network accessing procedure from the radio diagnosis layer.

13. Method according to claim 12, further comprising the steps of:
- receiving at the radio diagnosis layer an abort command from the at least one managing interface which is dedicated to cancel a current procedure, in particular the at least one network accessing procedure;
- promoting the abort command to the network accessing unit not before the radio diagnosis layer determines that the abort command is possible.

14. Method according to claim 12 or 13, wherein the at least one network accessing procedure consists of one or more defined operation groups, and wherein for the transition of at least two successive operation groups a condition is defined, **characterized in that** in case of a first condition value sending a status message characterizing status of the at least one network accessing procedure at this transition and/or in case of a second condition value aborting the at least one network accessing procedure upon received abort command at this transition.

15. Method according to one of the claims 12 to 14, further comprising the steps of:
- receiving an abort message at radio diagnosis layer from the at least one managing interface,
- indicating at network accessing unit thereafter that the currently performed network accessing procedure terminated successfully, in particular without reaching a transition of operation groups in the meantime, in particular one where an abort is allowed,
- performing the following steps at the radio diagnosis layer:
- determining whether said network accessing procedure is reversible, in particular if it is an attach, register, context activation or connect operation, wherein
- if network accessing procedure is reversible sending to the network accessing unit a command to execute a reverse operation, in particular a detach, deregister, context deactivation or disconnect operation.

16. Method according to one of the claims 12 to 15, further comprising the steps of:
- receiving from the at least one managing interface a managing command requesting a first network accessing procedure and afterwards a further managing command requesting a second network accessing procedure at the radio diagnosis layer, wherein the first network accessing procedure cannot be operated in parallel with the second network accessing procedure, in particular an attach, register, voice connection or context activation command, and
- performing at the radio diagnosis layer the steps of:
- determining whether the first network accessing procedure was successfully executed, wherein
- if this is the case, promoting said managing command requesting a second network accessing procedure to network accessing unit,
- otherwise determining whether the network accessing procedure, in particular the first network accessing procedure, is currently under execution, wherein
- if this is the case, deriving from the further managing command requesting the second network accessing procedure an abort command and promoting said abort command to the network accessing unit, in particular under one or more of the conditions defined in one or more of claims 13, 14 and 15, in order to allow promoting original managing command requesting a second network accessing procedure to network accessing unit.
